(19) Europäisches Patentamt / European Patent Office / Office européen des brevets

(11) **EP 3 237 239 B1**

(12) **EUROPEAN PATENT SPECIFICATION**

(45) Date of publication and mention of the grant of the patent:
**27.03.2019 Bulletin 2019/13**

(21) Application number: **15817809.5**

(22) Date of filing: **18.12.2015**

(51) Int Cl.:
***B60C 23/06*** *(2006.01)*      ***B60C 23/04*** *(2006.01)*
***B60C 11/24*** *(2006.01)*

(86) International application number:
**PCT/EP2015/080530**

(87) International publication number:
**WO 2016/102379 (30.06.2016 Gazette 2016/26)**

(54) **METHOD AND SYSTEM FOR DETERMINING A WHEEL LOAD ACTING ON A TIRE OF A VEHICLE**

SYSTEM UND DESSEN VERFAHREN ZUR BESTIMMUNG EINER FAHRZEUGSRADLAST

SYSTEME ET METHODE POUR DETERMINER LA CHARGE D'UNE ROUE DE VEHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2014  DE 102014226872**
           **23.03.2015  GB 201504866**

(43) Date of publication of application:
**01.11.2017  Bulletin 2017/44**

(73) Proprietor: **Continental Automotive GmbH**
**30165 Hannover (DE)**

(72) Inventors:
• **DHARAMSHI, Parthiv**
  **93049 Regensburg (DE)**
• **HAAS, Thomas**
  **93093 Donaustauf (DE)**
• **KRETSCHMANN, Matthias**
  **93173 Wenzenbach (DE)**
• **SPOTKA, Jürgen**
  **93128 Regenstauf (DE)**

(56) References cited:
**EP-A1- 2 774 784      EP-A2- 2 679 411**
**EP-A2- 2 777 956      WO-A1-2004/057292**

**Description**

The present invention relates to a method and a system for determining a wheel load acting on a tire of a vehicle.

Modern vehicles often contain a tire pressure monitoring system (TPMS) for measuring actual tire pressures of the tires mounted on the respective wheels of the vehicle. This enables e.g. to provide a warning about an incorrect tire pressure.

However, the wheel load acting on a tire of the vehicle significantly influences the required tire pressure. For example, the correct tire pressure of an empty vehicle will be incorrect when the vehicle is fully loaded e.g. by additional passengers and/or luggage in the vehicle, and vice versa. Insofar, there is also a need for determining the wheel load e.g. for evaluating an actual tire pressure in terms of correctness.

US 8 255 114 B1 discloses a method and a system for determining a wheel load based on a measurement of the length of the footprint of the wheel's tire, i.e. the contact area between tire and ground. Namely, it is known that the wheel load affects the size and thus in particular the length of the footprint of the tire. In this prior art determination method, the wheel load is calculated using a set of equations and equation parameters, which have to be determined and stored in advance. This is accomplished by analyses of individual tires or tire types to determine a suitable set of equations or a suitable equation parameters set. Although, the known method and system takes into account that such suitable equations and parameters may change upon an exchange of the tires, the handling of this problem necessitates a laborious acquisition of the equations and equation parameters.

EP 2 774 784 A1 discloses a method and a system for determining a wheel load acting on a tire of a vehicle according to the preambles of claims 1 and 14, respectively.

WO 2004/057292 A1 discloses a method for measuring characteristic properties of a pneumatic tire for vehicle wheels which comprises the steps of arranging at least one array of sensors along a direction y transversal to a motion direction x of the tire, making the tire pass at speed over least one array of sensors along said direction x, detecting the speed of deformation of each sensor, generating, for each sensor, an electrical signal proportional to said speed of deformation and determining, starting from each detected electrical signal, at least one characteristic property of the tire, for example the size and/or shape of the footprint area of the tire.

EP 2 679 411 A2 discloses a method of estimating a load bearing on a vehicle tire. The method comprises: deploying a deformation measuring sensor in the tire, the deformation measuring sensor generating a cyclical tire deformation signal indicative of tire deformation in a contact patch of a rolling tire; deploying a tire inflation pressure measuring sensor in the tire, the inflation pressure measuring sensor measuring tire inflation pressure from within a tire cavity, and calculating a tire rolling speed estimation based upon the tire deformation signal; calculating a tire contact patch length estimation based upon the tire deformation signal; and calculating a load estimation on the tire based upon the tire inflation pressure, the tire contact patch length estimation, and the tire rolling speed estimation.

It is an object of the present invention, to provide an alternative method and a system for determining a wheel load acting on a tire of a vehicle, which can be employed more universally and which can also deal with the problem of varying tire characteristics, in the case of an exchange of tires.

According to an aspect of the invention, a method for determining a wheel load acting on a tire of a vehicle comprises:

a) determining a footprint of the tire,

b) receiving a tire information that identifies a type of the tire and/or characterizes physical properties of the tire as such,

c) receiving tire operation conditions based on a measurement,

d) selecting one of a plurality of predetermined calculation models based on the received tire information, wherein each of the predetermined calculation models defines the wheel load as a function of the footprint and the tire operation conditions for a respective tire type and/or respective physical properties of the tire as such,

e) calculating the wheel load based on the determined footprint and the received tire operation conditions, using the selected calculation model.

According to the invention, the tire information received in step b) comprises data related to tread depth.

As mentioned above, the method according to the invention calculates the wheel load based on a determined footprint by using a suitable calculation model. However, it is essential for the invention that the used calculation model is selected from a plurality of predetermined and e.g. stored calculation models, wherein this selection is based on a received tire information that identifies a type of the tire and/or characterizes physical properties of the tire as such.

As each of the predetermined calculation models individually defines the wheel load as a function of the footprint and the tire operation conditions, it can be safeguarded a suitable and universally employable determination of the wheel load taking into account all actual parameters that influence the relationship between wheel load and footprint.

Thus, the invention allows optimizing a load detection in a vehicle.

The invention relies on the fact that the wheel load can be calculated with high accuracy from the footprint, if the calculation takes into account the above mentioned "tire information" and "tire operation conditions" as the relevant impact factors in the relationship between wheel load and footprint. In the following, some of such impact factors are discussed in more detail.

Firstly, with respect to "vehicle velocity", the tire will feel radial acceleration which is acting in outwards direction. This acceleration will increase with velocity and it is determined by the equation $a_r = v^2/r$, wherein $a_r$ is the radial acceleration, v is the vehicle velocity, and r is the tire radius. This acceleration $a_r$ will increase quadratic with velocity v, which means this acceleration will increase rapidly. As a result of very high acceleration, tire will experience high forces and it will expand. This phenomenon has an impact on footprint. The footprint will not be the same at low velocity and high velocity (when keeping e.g. same tire pressure and same wheel load).

The effect of "tire temperature" is related with the tire pressure and also with the properties of the tire material (e.g. a rubber compound). As tire temperature increases, tire pressure will increase which can be approximated by ideal gas law. Simultaneously rubber parts of tire will become softer. These effects of increasing of tire pressure and softening of tire material will affect the footprint.

Seasonal change in environment will affect the properties of the tire material straightaway. Therefore, tires are produced typically under summer, winter and all season tire labels. These labels typically indicate different rubber compounds which will be suitable in different temperature ranges. This means that the tire type in terms of the "season stipulated for the tire" is also affecting the footprint.

Another influencing factor is the tire wear. The "tread depth" is also affecting the footprint. Tire curvature which result in footprint, in case of low tread tire is changed. The footprint of a low tread tire will not be same as in case of the full tread tire.

The tire age is also one of the affecting factors. Tire curvature which result in footprint, in case of a few years old tire is changed. The footprint of a few years old tire will not be same as in case of the new tire.

Furthermore, the "tire dimension" such as in particular the "aspect ratio" has an influence on footprint. When a higher aspect ratio tire and a lower aspect ratio tire carry same load, the footprint will be different between these tires.

In an embodiment of the invention, in step a) the footprint is determined as a length of a footprint area of the tire. Such determination can be done e.g. by using a tire based sensor, i.e. a sensor arranged at the respective tire, as e.g. a deformation sensor (e.g. "bending element"), or an acceleration and/or shock sensor etc..

In an embodiment, step a) is conducted by means of a wheel unit disposed at the tire and comprising a sensor for measuring a deformation of the tire and a determining unit for determining the footprint based on the measured deformation of the tire. Such wheel units as such are known from the prior art and can also be used in the present invention.

In an embodiment, the tire information received in step b) comprises data related to at least one of: tire type, tire dimension, season stipulated for the tire, material and/or material properties, age and/or manufacturing date.

In a preferred embodiment, the tire information received in step b) comprises at least data related to: tire type and/or tire dimension. In a development of this embodiment, all of the remaining tire information data mentioned above are included in the tire information received in step b).

The data related to the tire type may comprise e.g. tire code information. The data related to the tire dimension may include at least one of rim diameter, tire width, and tire aspect ratio. The data related to the season stipulated for the tire may define whether a tire is a summer tire, a winter tire or an all season tire. The data related to the material may include an indication about a chemical class to which the body material of the tire belongs. The data related to the material properties may include in particular an indication of the stiffness of the tire material.

The tire information may contain at least one indication based on a classification (e.g. summer tire, soft rubber, tire with run flat ability etc.) and/or at least one indication expressed by a corresponding value (tire diameter, tread depth, tire manufacturing date etc.).

In an embodiment, the tire information in step b) is received at least partially from a digital store disposed at the tire.

Preferably, such store is disposed in a wheel unit disposed at the tire and e.g. arranged in or on the tire in the region of the running surface of the tire. The store may be accessed via wireless communication preferably via LF and RF communications (e.g. as known from RFID systems).

Preferably, such wheel unit further comprises a sensor module having a sensor for providing a sensor signal dependent on a mechanical tire load (e.g. acceleration and/or deformation) at a predefined measurement location at the tire. Such sensor module can be advantageously used for determining the footprint of the tire and as the case may be, for further determining at least a part of the tire operation conditions needed in step c) of the inventive method.

In an embodiment, the tire information in step b) is received at least partially from a digital store disposed in a control unit of the vehicle.

Such digital store may be disposed in a central control unit (e.g. in-vehicle computer) of the vehicle, which also performs other control functions of vehicle as e.g. an electronic stability program (ESP). The central control unit may be equipped with a microcontroller for processing these control functions and for accessing the digital store containing (at least a part of) the tire information. This digital store may be a partition of a larger store that also contains software code for performing said control functions of the central control unit.

Preferably, the central control unit and thus the digital store storing the respective tire information can be accessed via a human machine interface (HMI) by the driver and/or service persons for setting or amending, respectively, the tire information stored therein.

In an embodiment, the tire operation conditions received in step c) comprise at least one of and preferably all of: tire pressure, tire temperature, vehicle velocity and/or tire rotational speed, vehicle acceleration, in particular vehicle lateral acceleration and vehicle longitudinal acceleration, and/or tire rotational acceleration.

At least the tire pressure and the tire temperature may be provided by corresponding sensors (pressure sensor and temperature sensor) disposed at the tire, wherein these sensors may be disposed at a sensor module disposed at the tire, e.g. the sensor module mentioned above, which also has the sensor for determining the footprint of the tire and as the case may be a digital store for storing at least a part of tire information.

If such sensor module comprises the above mentioned sensor for providing a sensor signal dependent on a mechanical tire load at a predefined measurement location at the tire, this sensor signal can be advantageously also used for determining tire rotational speed and/or tire rotational acceleration. This is because said sensor signal comprises more or less periodically appearing signal characteristics associated with the instances at which the measurement location of the rotating tire passes the footprint. Thus, an analysis of the sensor signal allows for a calculation of the rotational speed and/or acceleration of the tire.

In an embodiment, the measurement upon which the receiving of the tire operation conditions in step c) is based comprises a measurement conducted by a measurement unit (e.g. above mentioned sensor module) disposed at the tire.

Alternatively, or in addition, the tire operation conditions may also be provided by use of a central control unit (e.g. in-vehicle computer) of the vehicle, which processes results of measurements that are conducted also for the purpose of enabling the control functions of the vehicle provided by the central control unit.

In an embodiment, each of the predetermined calculation models used in step d) is represented by a respective set of digitally stored model parameters.

Each of the predetermined calculation models, e.g. digitally stored model parameters, may define one or more mathematical formulas enabling a calculation of the wheel load from the determined footprint, the received tire information and the received tire operation conditions, wherein the digitally stored model parameters may characterize the form of the mathematical formulas as such and/or parameters (function parameters) of these formulas.

In an embodiment, in step e) the wheel load is calculated based on the formula

$$WL = f1(TP, FPAn)$$

wherein WL is the wheel load, TP is the tire pressure, FPAn is a normalized footprint area of the tire, and f1 is a first function commonly used in the calculation models,

wherein the normalized footprint area is calculated based on the formula

$$FPAn = f2(FPA, ti, toc)$$

wherein FPA is a footprint area determined based on the determined footprint in step a) taking into account the tire information received in step b), ti is the tire information received in step b), and toc are the tire operation conditions received in step c).

In this embodiment, the (mathematical) functions f1 and f2 constitute the calculation model selected in step d) and used in step e). Accordingly, the selection performed in step d) may comprise a concrete definition of the functions f1 and/or f2 based on the received tire information ti.

Further, in this embodiment, the normalized footprint area FPAn can be regarded as an auxiliary quantity calculated in the inventive method, which represents a fictive footprint area of the tire when assuming predetermined values (as a norm) of parameters belonging to the tire information and/or tire operation conditions.

In a further development of this embodiment, the normalized footprint area FPAn used in step e) is calculated as a difference between the actual determined footprint area FPA and a third function g (normalization function) of the respective values. For example, the normalized footprint area can be calculated based on the formula

$$FPAn = FPA - g(ti1, ti2, ...; toc1, toc2, ...)$$

wherein $ti1$, $ti2$, ... are one or more components of the tire information $ti$, and $toc1$, $toc2$, ... are one or more components of the tire operation conditions $toc$.

The normalization function $g$ defines the difference between the normalized footprint area $FPAn$ and the actual footprint area $FPA$.

The normalization function $g$ can be chosen, for example, dependent on tire season type and/or tire dimension.

In an embodiment, the component(s) $ti1$, $ti2$, ... of the tire information $ti$ used in above function $g$ is at least one of the tread depth and the tire age.

In an embodiment, the component(s) $toc1$, $toc2$, ... of the tire operation conditions $toc$ used in above function $g$ are at least: vehicle velocity (or tire rotational velocity) and tire temperature.

In the inventive method, the predetermined calculation models can contain a plurality of predetermined normalization functions $g$, which in this case are preferably "preclassified" based e.g. on different tire type classes and/or different tire dimensions classes.

With such preclassification method, different normalization functions $g$ can be defined e.g. as illustrated by the following example:

| tire season type class: | tire dimension class: | normalization function: |
|---|---|---|
| "A" | "A" | gAA(vehicle velocity, tire temperature, tread depth) |
| "B" | "A" | gBA(vehicle velocity, tire temperature, tread depth) |
| "A" | "B" | gAB(vehicle velocity, tire temperature, tread depth) |
| "B" | "B" | gBB(vehicle velocity, tire temperature, tread depth) |
| ... | ... | ... |

In the above example (table), each tire type class is defined by the season stipulated for the tire. Therefore, tire season class "A" may apply e.g. for summer tires and tire season class "B" may apply e.g. for winter tires. Each tire dimension class may be defined by corresponding ranges for at least one of: diameter, width, aspect ratio of the tire. Thus, tire dimension class "A" may apply for tires having a diameter, a width, and an aspect ratio each lying within a corresponding range for the respective parameter, wherein these ranges are defined by this tire dimension class "A".

In an embodiment, the predetermined calculation models, and in particular e.g. above mentioned normalization functions (e.g. gAA, gBA, gAB, gBB in the above example) used in such calculation models, are initially determined in advance based on a fitting of previously recorded experimental data.

To this end, the mathematical form of equations used in the calculation models can be in particular designed based on physical model assumptions describing the influence of the relevant variables of the tire information $ti$ and the relevant variables of the tire operation conditions $toc$ on the relationship between wheel load $WL$ and footprint (e.g. footprint area $FPA$, or footprint length $L$).

In this way, mathematical functions as e.g. the above mentioned functions $f1$, $f2$ and $g$ can be designed in terms of their mathematical "form", wherein respective function parameters (fixed or depending on tire information and/or tire operation conditions) can be determined by said fitting of recorded experimental data.

In the following, referring again to the above example of calculation models comprising normalization functions gAA, gBA, gAB, gBB etc., some aspects of said recording of experimental data and their use in predetermining calculation models are discussed.

In an experimental setup, keeping tire pressure, tire season type (e.g. winter, summer, all season tire) and tire dimension constant, the effects of individual variables such as vehicle velocity, tire temperature, tread depth and tire age can be studied and defined. In order to do this, one should consider the time frame on which these variables are varying in practice.

The "tread depth" and "tire age" will vary over longer time scale. Regular time interval monitoring on modified footprint over a longer time scale will show impact of tread depth and tire age on footprint. This effect can be eliminated by signal filtering such as high pass filtering with lower cut off frequency.

For remaining variables such as "vehicle velocity" and "tire temperature", they will vary more quickly than tread depth. For this, in the calculation of a normalized footprint area $FPAn$, the following boundary condition can be taken: $FPAn$ = constant, if vehicle velocity > predetermined threshold velocity (e.g. 10 km/h).

The relation with different variables such as vehicle velocity and tire temperature can be learnt in advance under favourable condition such as varying predominantly one variable, e.g. either velocity or tire temperature, while rest are at minimum change. Thus, the velocity or tire temperature dependency can be learnt from experimentally recorded data.

As an example, learning can be done by fitting mechanism. For this, certain data have to be collected under favourable condition. By applying fitting mechanism to these data, behaviour of certain variables such as vehicle velocity and/or tire temperature can be defined. This behaviour can be e.g. linear, quadratic etc. When using a normalized footprint area FPAn as defined by above mentioned equation FPAn = FPA - g(ti1, ti2, ...; tocl, toc2, ...), the calculation of wheel load WL in step e) can be made free from all the relevant variables which have formerly affected the result of footprint acquisition.

The above learning process can be done in advance. In this case, the suitable designed calculation models can be preprogrammed in a control unit of the vehicle (e.g. "ECU"). But such learning process may also involve an "online learning", which is done on the vehicle and is done automatically.

In an embodiment, step d) and/or step e) is conducted by a control unit (e.g. central control unit) of the vehicle using software running on that control unit.

In a respective further development of this embodiment, a wheel unit disposed at the tire is used for determining the footprint, and as the case may be provided at least a part of the tire information and/or the tire operation conditions, and communicates corresponding data (e.g. via wireless communication preferably via RF communication path) to the respective control unit of the vehicle. Based on such data, the control unit can perform the model selection of step d) and the wheel load calculation of step e).

In an embodiment, the conduction of step b) and step d) is initiated at the beginning of each driving period of the vehicle that follows a standstill period of at least a predetermined minimum standstill duration of the vehicle.

This embodiment takes into account the reasonable assumption that the tire information and thus the suitably selected calculation model (based on the tire information) can only change upon a longer lasting standstill period of the vehicle, namely enabling an exchange of one or more wheels or tires, respectively.

The minimum standstill duration may be chosen e.g. as being at least 1 min, or at least 2 min. On the other hand, a minimum standstill duration of e.g. up to 10 min, or up to 5 min can be chosen. In general, the minimum standstill duration may also be predefined dependent on the type of vehicle.

In another aspect of the present invention, a system for determining a wheel load acting on a tire of a vehicle is provided, which system comprises means for conducting the method according to the aspect of the invention as described above.

Accordingly, in an embodiment, a system for determining a wheel load acting on a tire of a vehicle comprises:

a) means for determining a footprint of the tire,

b) means for receiving a tire information that identifies a type of the tire and/or characterizes physical properties of the tire as such,

c) means for receiving tire operation conditions based on a measurement,

d) means for selecting one of a plurality of predetermined calculation models based on the received tire information, wherein each of the predetermined calculation models defines the wheel load as a function of the footprint and the tire operation conditions for a respective tire type and/or respective physical properties of the tire as such,

e) means for calculating the wheel load based on the determined footprint and the received tire operation conditions, using the selected calculation model.

The embodiments of the method described above can be used accordingly as embodiments and developments of the system according to the invention.

The method and the system may be implemented using a computer program product or software code, respectively, adapted to perform the method.

In another aspect of the invention, a vehicle equipped with such system for determining a wheel load is provided.

The invention will now be described in more detail by way of example embodiments with reference to the accompanying drawings, in which

Fig. 1    illustrates a schematic block diagram of a system for determining a wheel load according an embodiment,

Fig. 2    illustrates a schematic block diagram of a wheel unit used in the system of Fig. 1,

Fig. 3    illustrates a schematic flow-chart of essential steps conducted in a method for determining a wheel load according to the invention, and

Fig. 4    illustrates a flow-chart of a method for determining a wheel load according to an embodiment.

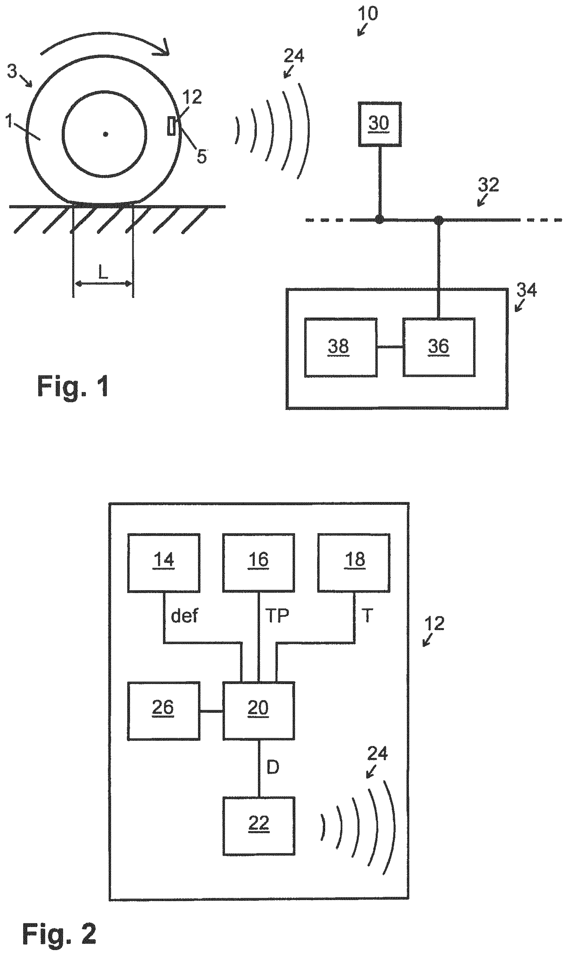

Fig. 1 illustrates an embodiment of a system 10 for determining a wheel load acting on a tire 1 of a wheel 3 of a vehicle.

The system 10 comprises:

a) means for determining a footprint of the tire 1,

b) means for receiving a tire information that identifies a type of the tire and/or characterizes physical properties of the tire as such,

c) means for receiving tire operation conditions based on a measurement,

d) means for selecting one of a plurality of predetermined calculation models based on the received tire information, wherein each of the predetermined calculation models defines the wheel load as a function of the footprint and the tire operation conditions for a respective tire type and/or respective physical properties of the tire as such,

e) means for calculating the wheel load based on the determined footprint and the received tire operation conditions, using the selected calculation model.

The above mentioned means of the system 10 can be described more detailed as follows:

a) Means for determining a footprint

The footprint is determined as a length L (Fig. 1) of a footprint area of the tire 1 by means of a wheel unit 12 disposed at the tire 1. The wheel unit 12 is illustrated in more detail in Fig. 2 and comprises a sensor 14 for measuring a local deformation of the tire 1 at a predetermined location 5 at the tire (corresponding to the location of the wheel unit 12) and a determining unit 20, implemented as a microcontroller, for determining the footprint length L (alternatively: e.g. footprint area) based on the measured deformation of the tire 1. In Fig. 2, the sensor signal provided by the sensor 14 is designated as "def".

The determining unit 20 generates data D, which are transferred to a transmitter 22 of the wheel unit 12, which transmits the data D by means of a wireless signal preferably an RF signal 24 to a vehicle unit 30 configured to receive the RF signal 24 and to transfer the data D via a digital bus system 32 to a central control unit 34 (in-vehicle computer) of the vehicle.

The central control unit 34 comprises an electronic control unit (ECU) 36, implemented as a microcontroller for conducting calculations, and a digital store 38.

Thus, in the illustrated embodiment, the means for determining a footprint (footprint length L) are constituted by the deformation sensor 14 and the determining unit 20 in the wheel unit 12.

b) Means for receiving a tire information

The tire information is received e.g. at least partially from a digital store 26 arranged in the wheel unit 12. The digital store 26 is connected to the determining unit 20, so that tire information can be transmitted by transmitter 22 via wireless communication, preferably via RF communication. A receiver 28 has functionality for receiving new and/or modified tire information via wireless communication, preferably via LF communication by user inputs (e.g. by service personal) via a trigger tool (not shown). These received tire information are transferred via the determining unit 20 into the digital store 26. The wheel unit 12 is configured to incorporate tire information from the digital store 26 into the data D, which are transmitted to the central control unit 34.

A further possibility for storing tire information is provided by the digital store 38 of the central control unit 34, which is also accessible by the ECU 36. In this case, the tire information components stored in the digital store 38 can be defined by user inputs (e.g. by service personal) via a (not shown) human machine interface (HMI) of the central control unit 34.

Thus, in the illustrated embodiment, the means for receiving a tire information are constituted by the digital store 26 of the wheel unit 12 and/or the digital store 38 of the vehicle's central control unit 34.

The received tire information comprises data related to: tire type, tire dimension, season stipulated for the tire, material and/or material properties, tread depth, age and/or manufacturing date.

c) Means for receiving tire operation conditions

The measurement upon which the receiving of the tire operation conditions is based comprises a measurement conducted by means of two additional sensors integrated within the wheel unit 12, namely a pressure sensor 16 for measuring a tire pressure TP in the tire 1 and a temperature sensor 18 for measuring a temperature T of the tire 1.
The respective measurement results TP and T are also incorporated into the data D to be transmitted to the central control unit 34.
Further, the wheel unit 12 can be configured to further incorporate a tire rotational speed (and/or based thereon a tire rotational acceleration) into these data D. This additional information can be determined by the determining unit 20 by way of an analysis of the sensor signal "def" provided by the deformation sensor 14. Further, if the determining unit 20 knows the diameter of the tire 1, it can e.g. also calculate vehicle velocity.
Such components of the tire operation conditions, here at least the tire pressure TP and the tire temperature T, which are provided by the wheel unit 12, are incorporated into the data D to be transmitted to the central control unit 34. Alternatively, or in addition, components of the tire operation conditions can be received from other systems (e.g. ESP) of the vehicle's control system. Such information component(s) may be available e.g. from the central control unit 34.
Thus, in the illustrated embodiment, the means for receiving tire operation conditions are constituted by the wheel unit 12 and corresponding functionalities of the central control unit 34.
The received tire operation conditions comprise: tire pressure, tire temperature, vehicle velocity and/or tire rotational speed, vehicle lateral and longitudinal accelerations and/or tire rotational acceleration.

d) Means for selecting a calculation model

The store 38 of the central control unit 34 stores not only software code for operating the ECU 36, but also a digital representation of the plurality of predetermined calculation models (e.g. mathematical modelling functions represented by digitally stored equation parameters). Based on the received tire information, the ECU 36 selects one of the stored calculation models by retrieving corresponding equation parameters etc. from the store 38.
Thus, in the illustrated embodiment, the means for selecting a suitable calculation model are provided by the respective functionality of the ECU 36.

e) Means for calculating the wheel load

The ECU 36 using software running thereon conducts not only the above mentioned selection of the calculation model, but also the calculation of the wheel load based on the determined footprint length L (or e.g. subsequently based on the length L determined footprint area FPA) and the received tire operation conditions, using the selected calculation model.

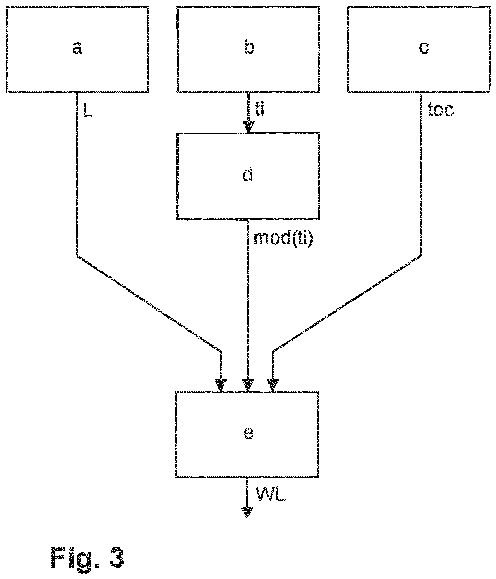

Fig. 3 summarizes the essential steps a) to e), which are necessary for the determination of the wheel load "WL" according to the invention.
The steps a), b) and c), i.e. the determining of footprint (step a), the receiving of tire information "ti" (step b) and the receiving of tire operation conditions "toc" (step c) are substantially independent from one another, i.e. can be conducted in sequence or parallel. In the case, however, that the determination of the tire operation conditions (step c) uses any result of the steps a) or b), the step c) should be conducted after a previous conduction of step a) or step b), respectively.
The step d), i.e. the selection of the suitable calculation model "mod(ti)", has to be conducted upon a previous conduction of step b).
The step e), i.e. the calculation of the wheel load WL, necessitates a previous conduction of steps a) to d).
The conduction of the steps a) to e) can be continuously repeated during driving periods of the vehicle. For saving calculation resources, however, steps b) and d) can often be omitted in such repeated processing according to Fig. 3. Namely, taking into account that a change in the tire information "ti" necessitates a preceding change of one or more tires or wheels, respectively, the steps b) and d) can be omitted by simply using the corresponding most recently selected calculation model in step e).

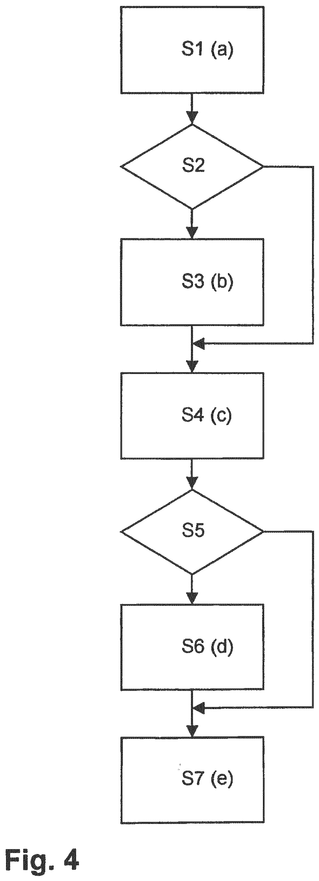

Fig. 4 is a more concrete flow-chart of a method for determining a wheel load WL, as can be performed e.g. by the system 10 of Fig. 1, in accordance to the more general flow-chat of Fig. 3.
In a step S1 corresponding to the method step a), the footprint length L is determined.
In a step S2, it is determined whether a driving period of the vehicle that follows a standstill period of at least a predetermined minimum standstill duration of the vehicle has just begun. If so, a step S3 corresponding to the method step b) is conducted (i.e. the tire information "ti" is received), followed by the conduction of a step S4 corresponding to the method step c). Otherwise, step S3 is omitted and the process jumps to step S4.

In step S4 the tire operation conditions "toc" are received.

In a step S5 it is determined whether a driving period of the vehicle that follows a standstill period of at least predetermined minimum standstill duration of the vehicle has just begun (To this end, the algorithm may simply resort to the result of step S2). If so, the process continues with a step S6 corresponding to the method step d), in which the selection of a calculation model "mod(ti)" in accordance with the received tire information "ti" is conducted, followed by a step S7. Otherwise, the step S6 is omitted and the process jumps to step S7.

In step S7, which corresponds to the method step e) the wheel load WL is calculated based on the determined footprint length L and the received tire operation conditions, using the most recently selected calculation model "mod(ti)".

In summary, the invention and the described embodiments provide a reliable method and system for determining a wheel load. The benefits of correct tire pressure at given tire load results in uniform tire wear, which means better usability of tire over its lifetime, reduction in fuel consumption, best safety, overload warning. In addition to that, the tire load information can be provided to different systems such as transmission control, engine control, power steering, vehicle dynamic control system for better driving experience and safety.

List of reference signs

| | |
|---|---|
| 1 | tire |
| 3 | wheel |
| 5 | measurement location |
| L | length of footprint |
| 10 | determining system |
| 12 | wheel unit |
| 14 | deformation sensor |
| def | deformation sensor signal |
| 16 | pressure sensor |
| TP | measured tire pressure |
| 18 | temperature sensor |
| T | measured temperature of tire |
| 20 | determining unit |
| D | data |
| 22 | transmitter |
| 24 | RF signal |
| 26 | digital store |
| 28 | receiver |
| 30 | vehicle unit |
| 32 | bus system |
| 34 | central control unit |
| 36 | ECU |
| 38 | digital store |
| ti | tire information |
| toc | tire operation conditions |
| mod(ti) | selected calculation model |
| WL | determined wheel load |

**Claims**

1. A method for determining a wheel load (WL) acting on a tire (1) of a vehicle, comprising:

a) determining a footprint of the tire (1),
b) receiving a tire information (ti) that identifies a type of the tire (1) and/or characterizes physical properties of the tire (1) as such,
c) receiving tire operation conditions (toc) based on a measurement,
d) selecting one of a plurality of predetermined calculation models based on the received tire information (ti), wherein each of the predetermined calculation models defines the wheel load (WL) as a function of the footprint and the tire operation conditions (toc) for a respective tire type and/or respective physical properties of the tire (1) as such,

e) calculating the wheel load (WL) based on the determined footprint and the received tire operation conditions (toc), using the selected calculation model,

**characterized in that** the tire information (ti) received in step b) comprises data related to tread depth.

2. The method according to claim 1, wherein in step a) the footprint is determined as a length (L) of a footprint area of the tire (1).

3. The method according to any of the preceding claims, wherein step a) is conducted by means of a wheel unit (12) disposed at the tire (1) and comprising a sensor (14) for measuring a deformation of the tire (1) and a determining unit (20) for determining the footprint based on the measured deformation of the tire (1).

4. The method according to any of the preceding claims, wherein the tire information (ti) received in step b) comprises data related to at least one of: tire type, tire dimension, season stipulated for the tire, material and/or material properties, age and/or manufacturing date.

5. The method according to any of the preceding claims, wherein the tire information (ti) in step b) is received at least partially from a digital store (26) disposed at the tire (1).

6. The method according to any of the preceding claims, wherein the tire information (ti) in step b) is received at least partially from a digital store (38) disposed in a control unit (34) of the vehicle.

7. The method according to any of the preceding claims, wherein the tire operation conditions (toc) received in step c) comprise at least one of: tire pressure, tire temperature, vehicle velocity and/or tire rotational speed, vehicle acceleration and/or tire rotational acceleration.

8. The method according to any of the preceding claims, wherein the measurement upon which the receiving of the tire operation conditions (toc) in step c) is based comprises a measurement conducted by a measurement unit (14, 16, 18, 20) disposed at the tire (1).

9. The method according to any of the preceding claims, wherein each of the predetermined calculation models used in step d) is represented by a respective set of digitally stored model parameters.

10. The method according to any of the preceding claims, wherein in step e) the wheel load is calculated based on the formula

$$WL = f1(TP, FPAn)$$

wherein WL is the wheel load, TP is the tire pressure, FPAn is a normalized footprint area of the tire, and f1 is a first function commonly used in the calculation models,
wherein the normalized footprint area is calculated based on the formula

$$FPAn = f2(FPA, ti, toc)$$

wherein FPA is a footprint area determined based on the determined footprint in step a) taking into account the tire information received in step b), ti is the tire information received in step b), and toc are the tire operation conditions received in step c).

11. The method according to any of the preceding claims, wherein step d) and/or step e) is conducted by a control unit (34) of the vehicle using software running on that control unit (34).

12. The method according to any of the preceding claims,
wherein the conduction of step b) and step d) is initiated at the beginning of each driving period of the vehicle that follows a standstill period of at least a predetermined minimum standstill duration of the vehicle.

13. The method according to any of the preceding claims,
   wherein the predetermined calculation models are determined based on a fitting of previously recorded experimental data.

14. A system for determining a wheel load acting on a tire of a vehicle, in particular according to a method as defined in any of claims 1 to 13, comprising:

   a) means (14, 20) for determining a footprint of the tire,
   b) means (26, 22, 30, 32, 38) for receiving a tire information (ti) that identifies a type of the tire and/or characterizes physical properties of the tire (1) as such,
   c) means (14, 16, 18, 20, 34) for receiving tire operation conditions (toc) based on a measurement,
   d) means (36) for selecting one of a plurality of predetermined calculation models based on the received tire information (ti), wherein each of the predetermined calculation models defines the wheel load (WL) as a function of the footprint and the tire operation conditions (toc) for a respective tire type and/or respective physical properties of the tire (1) as such,
   e) means (36) for calculating the wheel load (WL) based on the determined footprint and the received tire operation conditions (toc), using the selected calculation model,

   **characterized in that** the tire information (ti) comprises data related to tread depth.

15. A computer program product comprising software code adapted to perform a method according to any of claims 1 to 13.

## Patentansprüche

1. Verfahren zum Bestimmen einer Radlast (Wheel Load, WL), die auf einen Reifen (1) eines Fahrzeugs einwirkt, aufweisend:

   a) Bestimmen einer Aufstandsfläche des Reifens (1),
   b) Empfangen einer Reifeninformation (Tire Information, ti), die den Typ des Reifens (1) identifiziert und/oder physikalische Eigenschaften des Reifens (1) an sich kennzeichnet,
   c) Empfangen von Reifenbetriebsbedingungen (Tire Operation Conditions, toc) basierend auf einer Messung,
   d) Auswählen eines von mehreren vorbestimmten Berechnungsmodellen basierend auf der empfangenen Reifeninformation (ti), wobei jedes der vorbestimmten Berechnungsmodelle die Radlast (WL) als Funktion aus der Aufstandsfläche und den Reifenbetriebsbedingungen (toc) für einen jeweiligen Reifentyp und/oder jeweilige physikalische Eigenschaften des Reifens (1) an sich definiert,
   e) Berechnen der Radlast (WL) basierend auf der bestimmten Aufstandsfläche und den empfangenen Reifenbetriebsbedingungen (toc) mithilfe des ausgewählten Berechnungsmodells,

   **dadurch gekennzeichnet, dass** die Reifeninformation (ti), die in Schritt b) empfangen wird, Daten zur Profiltiefe aufweist.

2. Verfahren gemäß Anspruch 1, wobei in Schritt a) die Aufstandsfläche als eine Länge (L) eines Aufstandsflächenbereichs des Reifens (1) bestimmt wird.

3. Verfahren gemäß einem der vorstehenden Ansprüche, wobei Schritt a) mittels einer Radeinheit (12), die am Reifen (1) angeordnet ist und einen Sensor (14) zum Messen einer Deformation des Reifens (1) aufweist, und einer Bestimmungseinheit (20) zum Bestimmen der Aufstandsfläche basierend auf der gemessenen Deformation des Reifens (1) ausgeführt wird.

4. Verfahren gemäß einem der vorstehenden Ansprüche, wobei die Reifeninformation (ti), die in Schritt b) empfangen wird, Daten zu wenigstens einem der folgenden aufweist: Reifentyp, Reifenmaße, Jahreszeit, für die der Reifen vorgesehen ist, Material und/oder Materialeigenschaften, Alter und/oder Herstellungsdatum.

5. Verfahren gemäß einem der vorstehenden Ansprüche, wobei die Reifeninformation (ti) in Schritt b) wenigstens teilweise aus einem digitalen Speicher (26) empfangen wird, der am Reifen (1) angeordnet ist.

6. Verfahren gemäß einem der vorstehenden Ansprüche, wobei die Reifeninformation (ti) in Schritt b) wenigstens teilweise aus einem digitalen Speicher (38) empfangen wird, der in einer Steuereinheit (34) des Fahrzeugs angeordnet ist.

7. Verfahren gemäß einem der vorstehenden Ansprüche, wobei die Reifenbetriebsbedingungen (toc), die in Schritt c) empfangen werden, wenigstens eines der folgenden aufweisen: Reifendruck, Reifentemperatur, Fahrzeuggeschwindigkeit und/oder Umlaufgeschwindigkeit des Reifens, Fahrzeugbeschleunigung und/oder Drehbeschleunigung des Reifens.

8. Verfahren gemäß einem der vorstehenden Ansprüche, wobei die Messung, auf der das Empfangen der Reifenbetriebsbedingungen (toc) in Schritt c) basiert, eine Messung aufweist, welche von einer Messeinheit (14, 16, 18, 20) ausgeführt wird, die am Reifen (1) angeordnet ist.

9. Verfahren gemäß einem der vorstehenden Ansprüche, wobei jedes der vorbestimmten Berechnungsmodelle, die in Schritt d) verwendet werden, durch einen jeweiligen Satz von digital gespeicherten Modellparametern repräsentiert wird.

10. Verfahren gemäß einem der vorstehenden Ansprüche, wobei in Schritt e) die Radlast basierend auf folgender Formel berechnet wird:

$$WL = f1(TP, FPAn)$$

wobei WL die Radlast ist, TP der Reifendruck ist, FPAn ein normalisierter Aufstandsflächenbereich des Reifens ist und f1 eine erste Funktion ist, die allgemein in den Berechnungsmodellen zur Anwendung kommt,
wobei der normalisierte Aufstandsflächenbereich basierend auf folgender Formel berechnet wird:

$$FPAn = f2(FPA, ti, toc)$$

wobei FPA ein Aufstandsflächenbereich ist, der basierend auf der in Schritt a) bestimmten Aufstandsfläche unter Berücksichtigung der Reifeninformation, die in Schritt b) empfangen wird, bestimmt wird, ti die Reifeninformation ist, die in Schritt b) empfangen wird, und toc die Reifenbetriebsbedingungen sind, die in Schritt c) empfangen werden.

11. Verfahren gemäß einem der vorstehenden Ansprüche, wobei Schritt d) und/oder Schritt e) von einer Steuereinheit (34) des Fahrzeugs mittels Software, die auf dieser Steuereinheit (34) läuft, ausgeführt werden.

12. Verfahren gemäß einem der vorstehenden Ansprüche, wobei die Ausführung von Schritt b) und Schritt d) am Beginn jedes Fahrzeitraums des Fahrzeugs erfolgt, der auf einen Stillstandszeitraum von wenigstens einer vorbestimmten minimalen Stillstandsdauer des Fahrzeugs folgt.

13. Verfahren gemäß einem der vorstehenden Ansprüche, wobei die vorbestimmten Berechnungsmodelle basierend auf einem Einpassen von zuvor aufgezeichneten experimentellen Daten bestimmt werden.

14. System zum Bestimmen einer Radlast, die auf einen Reifen eines Fahrzeugs einwirkt, insbesondere gemäß einem Verfahren wie in einem der Ansprüche 1 bis 13 definiert, aufweisend:

    a) Mittel (14, 20) zum Bestimmen einer Aufstandsfläche des Reifens,
    b) Mittel (26, 22, 30, 32, 38) zum Empfangen einer Reifeninformation (Tire Information, ti), die den Typ des Reifens identifiziert und/oder physikalische Eigenschaften des Reifens (1) an sich kennzeichnet,
    c) Mittel (14, 16, 18, 20, 34) zum Empfangen von Reifenbetriebsbedingungen (Tire Operation Conditions, toc) basierend auf einer Messung,
    d) Mittel (36) zum Auswählen eines von mehreren vorbestimmten Berechnungsmodellen basierend auf der empfangenen Reifeninformation (ti), wobei jedes der vorbestimmten Berechnungsmodelle die Radlast (WL) als Funktion aus der Aufstandsfläche und den Reifenbetriebsbedingungen (toc) für einen jeweiligen Reifentyp und/oder jeweilige physikalische Eigenschaften des Reifens (1) an sich definiert,

e) Mittel (36) zum Berechnen der Radlast (WL) basierend auf der bestimmten Aufstandsfläche und den empfangenen Reifenbetriebsbedingungen (toc) mithilfe des ausgewählten Berechnungsmodells,

**dadurch gekennzeichnet, dass** die Reifeninformation (ti) Daten zur Profiltiefe aufweist.

**15.** Computerprogrammprodukt, das Softwarecode aufweist, der geeignet ist, ein Verfahren gemäß einem der Ansprüche 1 bis 13 auszuführen.

## Revendications

**1.** Procédé de détermination d'une charge de roue (WL) agissant sur un pneumatique (1) d'un véhicule, comprenant :

a) la détermination d'une empreinte du pneumatique (1),

b) la réception d'informations de pneumatique (ti) qui identifie un type du pneumatique (1) et/ou caractérisent des propriétés physiques du pneumatique (1) en tant que tel,

c) la réception de conditions de fonctionnement de pneumatique (toc) en fonction d'une mesure,

d) la sélection d'un d'une pluralité de modèles de calcul prédéterminés en fonction des informations de pneumatique reçues (ti), chacun des modèles de calcul prédéterminés définissant la charge de roue (WL) en fonction de l'empreinte et des conditions de fonctionnement de pneumatique (toc) d'un type de pneumatique respectif et/ou de propriétés physiques respectives du pneumatique (1) en tant que tel,

e) le calcul de la charge de roue (WL) en fonction de l'empreinte déterminée et des conditions de fonctionnement de pneumatique (toc) reçues, en utilisant le modèle de calcul sélectionné,

**caractérisé en ce que** les informations de pneumatique (ti) reçues à l'étape b) comprennent des données relatives à la profondeur de bande de roulement.

**2.** Procédé selon la revendication 1, dans lequel à l'étape a) l'empreinte est déterminée comme une longueur (L) d'une zone d'empreinte du pneumatique (1).

**3.** Procédé selon l'une quelconque des revendications précédentes, dans lequel l'étape a) est réalisée au moyen d'une unité de roue (12) disposée au niveau du pneumatique (1) et comprenant un capteur (14) pour mesurer une déformation du pneumatique (1) et une unité de détermination (20) pour déterminer l'empreinte en fonction de la déformation mesurée du pneumatique (1).

**4.** Procédé selon l'une quelconque des revendications précédentes, dans lequel les informations de pneumatique (ti) reçues à l'étape b) comprennent des données relatives à au moins un : d'un type de pneumatique, d'une dimension de pneumatique, d'une saison stipulée pour le pneumatique, d'un matériau et/ou de propriétés de matériau, d'un âge et/ou d'une date de fabrication.

**5.** Procédé selon l'une quelconque des revendications précédentes, dans lequel les informations de pneumatique (ti) à l'étape b) sont reçues au moins partiellement depuis une mémoire numérique (26) disposée au niveau du pneumatique (1).

**6.** Procédé selon l'une quelconque des revendications précédentes, dans lequel les informations de pneumatique (ti) à l'étape b) sont reçues au moins partiellement depuis une mémoire numérique (38) disposée dans une unité de commande (34) du véhicule.

**7.** Procédé selon l'une quelconque des revendications précédentes, dans lequel les conditions de fonctionnement de pneumatique (toc) reçues à l'étape c) comprennent au moins une : d'une pression de pneumatique, d'une température de pneumatique, d'une vélocité de véhicule et/ou vitesse de rotation de pneumatique, d'une accélération de véhicule et/ou accélération de rotation de véhicule.

**8.** Procédé selon l'une quelconque des revendications précédentes, dans lequel la mesure sur laquelle est basée la réception des conditions de fonctionnement de pneumatique (toc) à l'étape c) comprend une mesure réalisée par une unité de mesure (14, 16, 18, 20) disposée au niveau du pneumatique (1).

9. Procédé selon l'une quelconque des revendications précédentes, dans lequel chacun des modèles de calcul prédéterminés utilisés à l'étape d) est représenté par un ensemble respectif de paramètres de modèle mémorisés numériquement.

10. Procédé selon l'une quelconque des revendications précédentes, dans lequel à l'étape e) la charge de roue est calculée d'après la formule

$$WL = f1(TP, FPAn)$$

où WL est la charge de roue, TP est la pression du pneumatique, FPAn est une zone d'empreinte normalisée du pneumatique, et f1 est une première fonction communément utilisée dans les modèles de calcul,
la zone d'empreinte normalisée est calculée d'après la formule

$$FPAn = f2(FPA, ti, toc)$$

où FPA est une zone d'empreinte déterminée en fonction de l'empreinte déterminée à l'étape a) en tenant compte des informations de pneumatique reçues à l'étape b), ti représente les informations de pneumatique reçues à l'étape b), et toc représente les conditions de fonctionnement de pneumatique reçues à l'étape c).

11. Procédé selon l'une quelconque des revendications précédentes, dans lequel l'étape d) et/ou l'étape e) est réalisée par une unité de commande (34) du véhicule en utilisant un logiciel exécuté sur cette unité de commande (34) .

12. Procédé selon l'une quelconque des revendications précédentes,
dans lequel la réalisation de l'étape b) et de l'étape d) est lancée au début de chaque période de conduite du véhicule qui suit une période d'arrêt d'au moins une durée d'arrêt minimum prédéterminée du véhicule.

13. Procédé selon l'une quelconque des revendications précédentes, dans lequel les modèles de calcul prédéterminés sont déterminés en fonction d'un ajustement de données expérimentales mémorisées antérieurement.

14. Système de détermination d'une charge de roue agissant sur un pneumatique d'un véhicule en particulier selon un procédé défini dans l'une quelconque des revendications 1 à 13, comprenant :

a) un moyen (14, 20) de détermination d'une empreinte du pneumatique,
b) un moyen (26, 22, 30, 32, 38) de réception d'informations de pneumatique (ti) qui identifient un type du pneumatique et/ou caractérisent des propriétés physiques du pneumatique (1) en tant que tel,
c) un moyen (14, 16, 18, 20, 34) de réception de conditions de fonctionnement de pneumatique (toc) en fonction d'une mesure,
d) un moyen (36) de sélection d'une pluralité de modèles de calcul prédéterminés en fonction des informations de pneumatique reçues (ti), dans lequel chacun des modèles de calcul prédéterminés définit la charge de roue (WL) en fonction de l'empreinte et des conditions de fonctionnement de pneumatique (toc) d'un type de pneumatique respectif et/ou de propriétés physiques respectives du pneumatique (1) en tant que tel,
e) un moyen (36) de calcul de la charge de roue (WL) en fonction de l'empreinte déterminée et des conditions de fonctionnement de pneumatique (toc) reçues, en utilisant le modèle de calcul sélectionné,

**caractérisé en ce que** les informations de pneumatique (ti) comprennent des données relatives à la profondeur de bande de roulement.

15. Produit-programme informatique comprenant un code logiciel adapté pour mettre en oeuvre un procédé selon l'une quelconque des revendications 1 à 13.

**Fig. 1**

**Fig. 2**

**Fig. 3**

**Fig. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8255114 B1
- EP 2774784 A1
- WO 2004057292 A1
- EP 2679411 A2